# EUROPÄISCHE PATENTSCHRIFT

(11) **EP 4 184 113 B1**
(45) Veröffentlichungstag und Bekanntmachung des Hinweises auf die Patenterteilung: **14.08.2024**
(21) Anmeldenummer: 21209802.4
(22) Anmeldetag: 23.11.2021
(51) Int. Cl.: G01B 11/25

(54) **SYSTEM UND VERFAHREN ZUR INSPEKTION ZUMINDEST EINER GEOMETRIE ODER EINER OBERFLÄCHE EINES OBJEKTS**
SYSTEM AND METHOD FOR INSPECTING AT LEAST ONE GEOMETRY OR SURFACE OF AN OBJECT
SYSTÈME ET PROCÉDÉ D'INSPECTION D'AU MOINS UNE GÉOMÉTRIE OU D'UNE SURFACE D'UN OBJET

(43) Veröffentlichungstag der Anmeldung: 24.05.2023
(73) Patentinhaber: Fraunhofer-Gesellschaft zur Förderung der angewandten Forschung e.V., 80686 München (DE)
(72) Erfinder: Reiterer, Alexander, 79110 Freiburg (DE); Leidinger, Markus, 79110 Freiburg (DE)
(74) Vertreter: WSL Patentanwälte Partnerschaft mbB

(56) Entgegenhaltungen:
- EP-B1- 3 605 012
- US-B2- 10 942 261
- US-B2- 7 852 461

## Beschreibung

Die vorliegende Erfindung betrifft ein System zur Inspektion zumindest einer Geometrie oder einer Oberfläche eines Objekts mit einer Triangulationseinrichtung, wobei die Triangulationseinrichtung eine Strahlungsquelle, eine Zeilenoptik, einen Triangulationsdetektor und eine Auswerteeinrichtung aufweist, wobei die Strahlungsquelle derart eingerichtet ist, dass sie in einem Betrieb des Systems elektromagnetische Strahlung erzeugt und abstrahlt, wobei die Zeilenoptik derart eingerichtet und angeordnet ist, dass sie in dem Betrieb des Systems die von der Strahlungsquelle abgestrahlte elektromagnetische Strahlung zumindest derart formt oder ablenkt, dass die elektromagnetische Strahlung das Objekt beleuchtet und auf dem Objekt eine Linie ausbildet, wobei die Zeilenoptik und der Triangulationsdetektor derart angeordnet und eingerichtet sind, dass sie einen Basisabstand zueinander aufweisen und der Triangulationsdetektor ein Bild der Linie auf dem Objekt erfasst, wobei die Auswerteeinrichtung derart wirksam mit dem Triangulationsdetektor verbunden ist, dass die Auswerteeinrichtung in dem Betrieb des Systems ein das Bild repräsentierendes Signal von dem Triangulationsdetektor empfängt und wobei die Auswerteeinrichtung derart eingerichtet ist, dass sie in dem Betrieb des Systems aus einer Verzerrung des Bildes und dem Basisabstand ein erstes Maß zumindest für die Geometrie oder die Oberfläche des Objekts berechnet.

Die vorliegende Erfindung betrifft zudem ein Verfahren zur Inspektion zumindest einer Geometrie oder einer Oberfläche eines Objekts mit den Schritten: Erzeugen elektromagnetischer Strahlung mit einer Strahlungsquelle, Abstrahlen der elektromagnetischen Strahlung, zumindest Formen oder Ablenken der abgestrahlten elektromagnetischen Strahlung mit einer Zeilenoptik, so dass die elektromagnetische Strahlung das Objekt entlang einer Linie beleuchtet, Erfassen eines Bildes der Linie auf dem Objekt mit einem von der Zeilenoptik in einem Basisabstand angeordneten Triangulationsdetektor und Berechnen eines ersten Maßes für die Geometrie oder die Oberfläche des Objekts aus einer Verzerrung des Bildes und dem Basisabstand.

Infrastrukturbauwerke, wie z.B. Brücken, Dämme und Molenköpfe, aber auch andere Objekte, wie z.B. Schiffe, müssen regelmäßig auf ihren baulichen oder konstruktiven Zustand hin untersucht werden. Die Inspektion der Geometrie und/oder der Oberfläche des Objekts ist dabei ein Teil der Untersuchung. Für eine solche Inspektion bieten sich optische Messverfahren an, da sie eine hohe räumliche Auflösung bei der Erfassung der Geometrie und der Oberfläche des Objekts ermöglichen. Zudem ist die Auswertung von mit optischen Messverfahren erfassten Daten zuverlässig möglich.

Als bedeutsam bei der Verwendung optischer Messverfahren erweist sich jedoch, dass die Umgebungsbedingungen im Bereich des Strahlengangs der verwendeten elektromagnetischen Strahlung das Messergebnis beeinflussen. An Land kann es regnen oder Nebel kann die Sicht einschränken. Unter Wasser sind es zumeist feine Partikel, die mitunter zu einer erheblichen Streuung der verwendeten elektromagnetischen Strahlung führen. Die Qualität der Inspektion verringert sich durch schlechte Umgebungsbedingungen und häufig gibt es für die Qualität der Messung keinen Indikator. Gerade bei der Inspektion von Infrastrukturbauwerken muss jedoch eine hohe Qualität des Inspektionsverfahrens gewährleistet werden. Zudem sollte eine Inspektionskampagne an einem Objekt effizient ablaufen und soweit wie möglich unabhängig von den Umgebungsbedingungen sein. Die erforderlichen Messungen sollten an jedem zur Verfügung stehenden Arbeitstag durchführbar sein, unabhängig davon, wie die Sicht ist.

Gerade bei der ohnehin aufwendigen und daher kostenintensiven Inspektion von Objekten und Bauwerken unter Wasser spielt dieser Punkt eine große Rolle, wobei die Unsicherheit über den Einfluss der Umgebungsparameter auf die eigentliche Messung sehr hoch ist. Auch lassen sich die Umgebungsparameter insbesondere bei der Inspektion unter Wasser erst vor Ort erkennen, da es sich in der Regel um lokale Phänomene handelt, die auch nicht von typischerweise erhältlichen Vorhersagen abgedeckt sind.

Aus dem Stand der Technik ist es bekannt, eine Geometrie oder eine Oberfläche eines Objekts mithilfe einer Triangulationseinrichtung zu erfassen. Dabei wird in der Regel die elektromagnetische Strahlung mit einem Laser erzeugt, sodass häufig von Lasertriangulation gesprochen wird. Bei der Triangulation wird mit einer Strahlungsquelle, in der Regel einem Laser, eine Linie mit einem festen Öffnungswinkel in den Raum projiziert. Eine Kamera beobachtet diese Linie aus einem anderen Winkel. Befindet sich nun ein Objekt in dem von der Strahlungsquelle erzeugten Strahlengang, so wird die auf das Objekt projizierte Linie verzerrt. Die Verzerrung der Linie wird mit der Kamera beobachtet. Bei Kenntnis der geometrischen Grundform des Objekts kann man aus der Verzerrung der Linie auf die konkrete Geometrie des Objekts zurückschließen. Bewegen sich das Objekt und die Strahlungsquelle bzw. die Kamera relativ zueinander, so lässt sich das Objekt rastern oder abscannen und es entsteht ein dreidimensionales Bild der Geometrie und/oder Oberfläche des Objekts. Zum Beispiel offenbart US 7,852,461 B2 ein System zur Inspektion einer Geometrie eines Objekts mit einer Triangulationseinrichtung und einer Laufzeitmesseinrichtung. Dieses System weist eine Strahlungsquelle und eine Dualmoduskamera auf, die abhängig von der gewünschten Messauflösung und/oder dem Abstand zu dem Messobjekt alternativ zwischen Triangulationsmodus und Laufzeitmodus umschaltet.

Der maximale Arbeitsabstand zwischen der Triangulationseinrichtung und dem Objekt beträgt bei guter Sicht 8 m bis 10 m. Der maximale Arbeitsabstand verringert sich jedoch sehr schnell mit abnehmender Sicht. Die Kamera muss die Linie komplett erfassen und abbilden. Sobald Trübungen im Strahlengang vorliegen, weitet sich die auf das Objekt projizierte Linie auf, was eine Reduzierung der Auflösung nach sich zieht. Zudem kommt weniger Licht an der Kamera an. Die verringerte Strahlungsintensität, welche die Kamera erreicht, kann mit einer längeren Belichtungszeit kompensiert werden. Allerdings entsteht auf diese Weise eine größere Bewegungsunschärfe, welche wiederum die Auflösung verringert. Zudem wird die Erfassungsgeschwindigkeit reduziert.

Weiterhin ist die von der Strahlungsquelle abgestrahlte und auf das Objekt projizierte Leistung nach oben begrenzt, da die entsprechenden Laserschutzklassen einzuhalten sind. Dies reduziert zudem das Signal-Rausch-Verhältnis bei der Erfassung der elektromagnetischen Strahlung mit einer solchen Triangulationseinrichtung. Unter Wasser ist der maximale Arbeitsabstand bei einem solchen System zur Triangulationserfassung auf ein Secchi begrenzt. Secchi gibt dabei die Sichttiefe an, bei der ein Mensch mit seinem Auge in Wasser noch Kontraste der sogenannten Secchi-Scheibe wahrnehmen kann.

Demgegenüber ist es die Aufgabe der vorliegenden Erfindung, ein System und ein Verfahren zur Inspektion zumindest einer Geometrie oder einer Oberfläche eines Objekts bereitzustellen, welche die Abhängigkeit der Inspektion von den Umgebungsbedingungen, insbesondere der Sichtweite, reduziert.

Die zuvor genannte Aufgabe wird durch ein System zur Inspektion zumindest einer Geometrie oder einer Oberfläche eines Objekts gemäß dem unabhängigen Anspruch 1 der vorliegenden Anmeldung gelöst. Zur Lösung der Aufgabe weist daher ein System der eingangs genannten Art zusätzlich eine Laufzeitmesseinrichtung auf, wobei die Laufzeitmesseinrichtung die Strahlungsquelle, die Zeilenoptik und die Auswerteeinrichtung der Triangulationseinrichtung sowie einen Laufzeitdetektor und eine Modulationseinrichtung umfasst, wobei die Zeilenoptik und der Laufzeitdetektor derart angeordnet und eingerichtet sind, dass in dem Betrieb des Systems das Objekt an einer Mehrzahl von Punkten auf der Linie nacheinander beleuchtet wird und die von dem Objekt reflektierte elektromagnetische Strahlung von dem Laufzeitdetektor erfasst wird, wobei die Modulationseinrichtung derart eingerichtet ist, dass in dem Betrieb des Systems eine Amplitude der elektromagnetischen Strahlung moduliert ist, wobei die Auswerteeinrichtung derart wirksam mit dem Laufzeitdetektor verbunden ist, dass die Auswerteeinrichtung in dem Betrieb des Systems ein Laufzeitsignal empfängt und wobei die Auswerteeinrichtung derart eingerichtet ist, dass sie in dem Betrieb des Systems aus dem Laufzeitsignal jeweils eine Laufzeit der elektromagnetischen Strahlung von einem Referenzpunkt des Systems zu dem Objekt für eine Mehrzahl von Punkten auf der Zeile berechnet und aus den Laufzeiten für die Mehrzahl von Punkten ein zweites Maß zumindest für die Geometrie oder die Oberfläche des Objekts berechnet und zumindest das erste Maß oder das zweite Maß ausgibt.

Die vorliegende Erfindung kombiniert die Vorteile einer Triangulationseinrichtung bzw. eines Triangulationsverfahrens zur Erfassung einer Geometrie oder Oberfläche eines Objekts mit den Vorteilen einer Laufzeitmesseinrichtung bzw. eines Laufzeitmessverfahrens. Die Kombination der beiden Messverfahren erlaubt eine effiziente Adaption der Inspektion zumindest der Geometrie oder der Oberfläche des Objekts sowohl an den Arbeitsabstand der Strahlungsquelle und der Detektoren zu dem Objekt als auch an die Sichtverhältnisse.

Im Sinne der vorliegenden Anmeldung repräsentiert ein Maß für die Geometrie des Objekts seine makroskopische Struktur, beispielsweise seinen Grundriss oder Querschnitt. Im Sinne der vorliegenden Anmeldung repräsentiert ein Maß für die Oberfläche des Objekts eine Struktur der Oberfläche des Objekts auf einer kleineren Skala als die Geometrie, beispielsweise eine Rautiefe der Oberfläche.

Eine Laufzeitmesseinrichtung und ein Laufzeitmessverfahren im Sinne der vorliegenden Anmeldung werden im Englischen auch als Time of Flight-Messeinrichtung bzw. Time of Flight-Verfahren bezeichnet (kurz ToF-Messeinrichtung bzw. ToF-Messverfahren).

Bei einem ToF-Verfahren wird eine intensitätsmodulierte elektromagnetische Strahlung von der Strahlungsquelle erzeugt und abgestrahlt, wobei die Abstrahlung punktförmig erfolgt, sodass das Objekt im Wesentlichen an einem Punkt von der elektromagnetischen Strahlung beleuchtet wird. Die zurückgestreute elektromagnetische Strahlung wird mit dem Laufzeitdetektor erfasst. Durch Bestimmen der Laufzeit der elektromagnetischen Strahlung von der Strahlungsquelle zu dem Laufzeitdetektor wird der Abstand der Laufzeitmesseinrichtung, d.h. der Strahlungsquelle und/oder des Laufzeitdetektors vom Objekt, bestimmt. Zum Bestimmen der Laufzeit der Strahlung von der Strahlungsquelle vom Detektor kommen verschiedene aus dem Stand der Technik bekannten Verfahren in Betracht. In einer Ausführungsform wird die Modulationsfrequenz der Intensitätsmodulation als Referenzsignal verwendet und mit dem von dem Laufzeitdetektor erfassten Signal korreliert.

Erfolgt die Abstrahlung der elektromagnetischen Strahlung durch die Laufzeitmesseinrichtung so, dass der Punkt, mit dem das Objekt beleuchtet wird, über die Oberfläche des Objekts bewegt wird, so lässt sich die Oberfläche des Objekts rastern oder abscannen.

Im Vergleich zu der Triangulationsmessung hat die ToF-Messung den Vorteil, dass die verwendete elektromagnetische Strahlung punktförmig abgestrahlt wird. Dies erlaubt auch bei Einhaltung der zur Gewährleistung der Lasersicherheit erforderlichen Randbedingungen eine deutlich größere Strahlungsintensität pro Messpunkt. Dadurch wird ein wesentlich höherer Arbeitsabstand der Laufzeitmesseinrichtung gegenüber der Triangulationsmesseinrichtung möglich. Bei klarer Sicht ist selbst unter Wasser ein Arbeitsabstand von 50 m möglich. Noch in trübem Wasser ist eine Reichweite von 3-5 Secchi realistisch.

Der Kerngedanke des Systems gemäß der vorliegenden Erfindung ist es, eine einzige Strahlungsquelle sowohl für die Triangulationseinrichtung als auch für die Laufzeitmesseinrichtung zu verwenden. Das gleiche gilt für die Zeilenoptik und die Auswerteeinrichtung. Lediglich der Triangulationsdetektor und der Laufzeitdetektor werden als separate Bauelemente realisiert.

In einer Ausführungsform der Erfindung ist die Strahlungsquelle ein Laser.

In einer Ausführungsform der Erfindung hat die von der Strahlungsquelle erzeugte elektromagnetische Strahlung eine Wellenlänge in einem Bereich von 500 nm bis 1600 nm.

Die Auswerteeinrichtung ist in einer Ausführungsform der Erfindung ein Rechner. In einer Ausführungsform umfasst das System auch eine Steuereinrichtung zum Steuern der Funktionalitäten der einzelnen Elemente des Systems. In einer Ausführungsform übernimmt der Rechner gleichzeitig auch die Funktion der Steuereinrichtung. Insbesondere dient in einer Ausführungsform der Erfindung die Steuereinrichtung einer Steuerung der Zeilenoptik zum Beleuchten der Mehrzahl von Punkten auf der Linie nacheinander.

Die Auswerteeinrichtung übernimmt sowohl die Auswertung der von der Triangulationseinrichtung generierten Signale als auch der von der Laufzeitmesseinrichtung generierten Signale.

Erfindungsgemäß ist die Zeilenoptik derart ausgestaltet, dass sie in dem Betrieb des Systems das Objekt an einer Mehrzahl von Punkten auf der Linie nacheinander beleuchtet. Die Zeilenoptik im Sinne der vorliegenden Anmeldung formt die von der Strahlungsquelle erzeugte und abgestrahlte elektromagnetische Strahlung derart, dass auf dem Objekt eine Linie ausgebildet wird, wobei erfindungsgemäß die Linie aus einer Mehrzahl von entlang einer Linie, insbesondere einer Geraden, angeordneten Punkten besteht, da für die Laufzeitmesseinrichtung die Mehrzahl von Punkten auf der Oberfläche seriell nacheinander beleuchtet wird.

In einer Ausführungsform der Erfindung umfasst die Zeilenoptik eine Ablenkeinheit mit einem die von der Strahlungsquelle abgestrahlten elektromagnetischen Strahlung reflektierenden Spiegel. In einer Ausführungsform der Erfindung ist die Ablenkeinheit durch einen motorisch angetrieben schwenkbaren oder drehbaren Spiegel realisiert.

Zudem ist der Laufzeitdetektor derart angeordnet und eingerichtet, dass er in dem Betrieb des Systems die von dem Objekt reflektierte bzw. gestreute elektromagnetische Strahlung erfasst. Die Modulationseinrichtung der Laufzeitmesseinrichtung dient dazu, die elektromagnetische Strahlung, welche von der Strahlungsquelle generiert und von der Zeilenoptik abgestrahlt wird, mit einer Modulation zu versehen, sodass eine Laufzeitmessung möglich ist. In einer Ausführungsform der Erfindung ist die Auswerteeinrichtung derart mit der Modulationseinrichtung verbunden, dass die Auswerteeinrichtung in dem Betrieb des Systems zumindest ein die Modulationsfrequenz repräsentierendes Signal von der Modulationseinrichtung erhält.

Die Modulationseinrichtung umfasst in einer Ausführungsform der Erfindung einen Modulator, welcher der von der Strahlungsquelle erzeugten und abgestrahlten elektromagnetischen Strahlung eine Intensitätsmodulation aufprägt. Infrage kommen beispielsweise elektrooptische oder magnetooptische Modulatoren. In einer Ausführungsform jedoch beeinflusst die Modulationseinrichtung die Strahlungsquelle unmittelbar, sodass die Strahlungsquelle Pulse mit einer von der Modulationseinrichtung vorgegebenen Wiederholrate erzeugt.

Die Auflösung der Laufzeiteinrichtung ist lateral durch die Anzahl der Punkte, welche die Linie bilden, die pro Sekunde beleuchtet werden können, bestimmt. Diese wiederum hängt von der Modulationseinrichtung, der Zeilenoptik und dem Öffnungswinkel der abgestrahlten Lichtpunkte, dem Arbeitsabstand und gegebenenfalls einer Relativgeschwindigkeit zwischen dem System und dem Objekt ab. Realistisch lässt sich mit dem erfindungsgemäßen System in einer Ausführungsform eine laterale Auflösung in einem Bereich von wenigen Millimetern bis zu mehreren Zentimetern realisieren.

Das erfindungsgemäße System ermöglicht es, den Arbeitsabstand frei zu wählen, wobei je nach Arbeitsabstand entweder die Triangulationseinrichtung oder die Laufzeitmesseinrichtung oder beide zum Einsatz kommen. Grundsätzlich gilt, dass für größere Arbeitsabstände, beispielsweise von mehr als 8 m oder von mehr als 10 m, die Laufzeitmesseinrichtung verwendet wird und für kleinere Arbeitsabstände, beispielsweise von 8 m oder weniger oder von 10 m oder weniger, die Triangulationseinrichtung.

Das Verfahren, welches mit der Triangulationseinrichtung gemäß der vorliegenden Erfindung im Betrieb des Systems realisiert wird, wird auch als Lichtschnitt bezeichnet. Dieses Verfahren ermöglicht die Vermessung eines Höhenprofils entlang der auf das Objekt projizierten Linie.

Die laterale Auflösung der Triangulationseinrichtung wird in erster Linie von der Breite der auf dem Objekt ausgebildeten Linie, der Pixelzahl des Triangulationsdetektors und vom Arbeitsabstand bestimmt.

Die Tiefenauflösung der Triangulationseinrichtung wiederum hängt vom gewählten Basisabstand ab. Die erfindungsgemäße Triangulationseinrichtung erreicht bei einem Arbeitsabstand von 2 m eine laterale Auflösung in einem Bereich von 0,1 mm bis 3 mm, bei einem Arbeitsabstand von 5 m noch immer eine laterale Auflösung von 1 mm bis 10 mm. Der Arbeitsabstand der Triangulationseinrichtung ist in einer Ausführungsform auf einen Bereich von 0,5 m bis 10 m oder von 0,5 m bis 8 m beschränkt.

In einer Ausführungsform der Erfindung ist der Triangulationsdetektor eine Digitalkamera, beispielsweise eine CCD-Kamera oder eine CMOS-Kamera. Insbesondere kann der Triangulationsdetektor in einer Ausführungsform eine digitale Zeilenkamera sein.

Damit die Auswerteeinrichtung ein Bild der Linie auswerten kann, weist in einer Ausführungsform der Triangulationsdetektor eine Integrationszeit auf, die es ermöglicht, in einem Bild alle von der Zeilenoptik beleuchteten Punkte der Linie zu erfassen.

In einer Ausführungsform der Erfindung ist der Basisabstand der Triangulationseinrichtung einstellbar veränderbar. Der veränderbare Basisabstand ermöglicht es, die Auflösung der Triangulationseinrichtung an die Umgebungsbedingungen anzupassen.

Die Grundidee der vorliegenden Anmeldung ist getrieben durch die Möglichkeit, das System zur Inspektion zumindest einer Geometrie oder einer Oberfläche mobil auszugestalten, wobei der Arbeitsabstand während der Messkampagne variiert, da das System gegenüber dem Objekt bewegt wird.

Daher betrifft die vorliegende Erfindung auch ein Fortbewegungsmittel, beispielsweise ein Unterseeboot, mit einem System, so wie es in Ausführungsformen davon zuvor beschrieben wurde.

Die Anordnung des Systems auf einem Fortbewegungsmittel ermöglicht die Abtastung der Oberfläche des gesamten Objekts durch eine Relativbewegung des Fortbewegungsmittels mit dem System gemäß einer Ausführungsform der Erfindung gegenüber dem Objekt und damit eine Bewegung der Linie der elektromagnetischen Strahlung, mit welcher das Objekt beleuchtet wird, über die Oberfläche des Objekts hinweg.

Die zuvor genannte Aufgabe wird zudem durch auch durch ein Verfahren zur Inspektion zumindest einer Geometrie oder einer Oberfläche eines Objekts gelöst, so wie es in dem unabhängigen, auf das Verfahren gerichteten Anspruch dieser Anmeldung definiert ist. Dazu weist ein Verfahren der eingangs genannten Art weiterhin die Schritte auf: Modulieren einer Amplitude der elektromagnetischen Strahlung, Beleuchten des Objekts an einer Mehrzahl von Punkten auf der Linie nacheinander mit der modulierten elektromagnetischen Strahlung, Erfassen der von dem Objekt reflektierten elektromagnetischen Strahlung, Bestimmen jeweils einer Laufzeit der elektromagnetischen Strahlung von einem Referenzpunkt in einem Strahlengang der elektromagnetischen Strahlung zu dem Objekt für eine Mehrzahl von Punkten auf der Linie, Berechnen eines zweiten Maßes zumindest für die Geometrie oder die Oberfläche des Objekts entlang der Linie aus den Laufzeiten für die Mehrzahl von Punkten auf der Linie und Ausgeben zumindest des ersten oder des zweiten Maßes.

Soweit im Folgenden Aspekte der Erfindung im Hinblick auf das Verfahren zur Inspektion zumindest einer Geometrie oder einer Oberfläche eines Objekts beschrieben werden, so gelten diese auch für das zuvor beschriebene System und umgekehrt. Soweit das Verfahren mit einem System gemäß einer Ausführungsform dieser Erfindung ausgeführt wird, so weist dieses die entsprechenden Einrichtungen hierfür auf. Insbesondere sind Ausführungsformen des Systems zum Ausführen der nun beschriebenen Ausführungsformen des Verfahrens geeignet.

In einer Ausführungsform der Erfindung umfasst das Verfahren den Schritt: Bestimmen eines Arbeitsabstands der Oberfläche des Objekts von dem Referenzpunkt. Steht der Arbeitsabstand zur Verfügung, so lässt sich eine Entscheidung treffen, welches der beiden Messverfahren und damit welches der ersten und zweiten Maße für die Geometrie oder die Oberfläche des Objekts geeigneter sind.

Daher weist das Verfahren in einer Ausführungsform zusätzlich die Schritte auf: wenn der Arbeitsabstand größer ist als ein vorgegebener Abstandsschwellenwert, Ausgeben nur des zweiten Maßes zumindest für die Geometrie oder die Oberfläche des Objekts und wenn der Arbeitsabstand kleiner oder gleich dem Abstandsschwellenwert ist, Ausgeben nur des ersten Maßes zumindest für die Geometrie oder die Oberfläche des Objekts.

In der Ausführungsform der Erfindung beträgt der Abstandsschwellenwert 10 m, vorzugsweise 8 m.

Grundsätzlich ist es möglich, den Arbeitsabstand der Oberfläche des Objekts von dem Referenzpunkt bzw. dem Arbeitsabstand mit einer Reihe von Verfahren zu bestimmen. Insbesondere ist es möglich, den Arbeitsabstand mit einem dritten, von dem Triangulationsverfahren und dem Laufzeitmessverfahren verschiedenen Verfahren zu bestimmen. In einer Ausführungsform der Erfindung jedoch erfolgt das Bestimmen des Arbeitsabstands durch Berechnung aus der Laufzeit für mindestens einen Punkt auf der Linie, d.h. mit dem Laufzeitmessverfahren.

In einer Ausführungsform der Erfindung umfasst das Verfahren den Schritt: Bestimmen eines Qualitätsmaßes für das zweite Maß zumindest für die Geometrie oder die Oberfläche des Objekts. Das Laufzeitmessverfahren eignet sich dazu, ein Qualitätsmaß, insbesondere ein Qualitätsmaß für die während der Messung geltenden Sichtbedingungen, zu bestimmen.

In einer Ausführungsform der Erfindung weist das Verfahren zudem die Schritte auf: Wenn das Qualitätsmaß größer ist als ein vorgegebener Qualitätsschwellenwert, Ausgeben nur des ersten Maßes zumindest für die Geometrie oder die Oberfläche des Objekts und wenn das Qualitätsmaß kleiner oder gleich dem Qualitätsschwellenwert ist, Ausgeben nur des zweiten Maßes zumindest für die Geometrie oder die Oberfläche des Objekts. Es hat sich gezeigt, dass das Laufzeitmessverfahren eine wesentlich geringere Abhängigkeit der Qualität von den Sichtbedingungen aufweist als das Triangulationsverfahren.

In einer Ausführungsform des Verfahrens ist die Oberfläche des Objekts unter Wasser angeordnet, wobei das Qualitätsmaß ein Trübungsgrad des Wassers oder eine Sichtweite unter Wasser ist.

In einer Ausführungsform der Erfindung wird das Qualitätsmaß aus der Laufzeit der elektromagnetischen Strahlung zumindest eines Punktes auf der Linie berechnet.

In einer Ausführungsform der Erfindung weist das Verfahren zudem die Schritte auf: Berechnen eines Ausgabemaßes aus dem Arbeitsabstand und dem Qualitätsmaß, wenn das Ausgabemaß größer ist als ein vorgegebener Ausgabeschwellenwert, Ausgeben nur des zweiten Maßes zumindest für die Geometrie oder die Oberfläche des Objekts und wenn das Ausgabemaß kleiner oder gleich dem Ausgabeschwellenwert ist, Ausgeben nur des ersten Maßes zumindest für die Geometrie oder die Oberfläche des Objekts. Dieses Ausgabemaß bildet ein Kriterium aus dem Arbeitsabstand und dem Qualitätsmaß, d.h. den Umgebungsbedingungen der Messung, sodass die Entscheidung, welches der Messverfahren für das auszugebende Maß für die Geometrie oder die Oberfläche des Objekts herangezogen wird, auf einer Kombination zweier Kriterien beruht.

In einer Ausführungsform der Erfindung wird die Linie gegenüber dem Objekt bewegt. In einer weiteren Ausführungsform wird der Referenzpunkt gegenüber dem Objekt bewegt.

In einer Ausführungsform des Verfahrens ist das Objekt unter Wasser angeordnet. In einer weiteren Ausführungsform sind zumindest der Triangulationsdetektor und der Laufzeitdetektor des Systems unter Wasser angeordnet. In einer weiteren Ausführungsform ist auch die Strahlungsquelle des Systems unter Wasser angeordnet.

In einer Ausführungsform der Erfindung wird eine Position des Referenzpunkts des Systems relativ zu einem Punkt auf der Oberfläche des Objekts mittels einer Positionsstabilisierung konstant gehalten.

Eine Voraussetzung für eine hohe laterale Auflösung des Triangulationsverfahrens ist, dass die Linie scharf auf das Objekt abgebildet wird. Demgegenüber führt eine scharfe Abbindung des Punktes für das Laufzeitmessverfahren zu einem Verlust an von dem Laufzeitdetektor erfassbarer Intensität. Daher wird in einer Ausführungsform der Erfindung für die laterale Ausdehnung der Linie ein Kompromiss zwischen der Triangulation und dem Laufzeitmessverfahren gewählt.

Weitere Vorteile, Merkmale und Anwendungsmöglichkeiten der vorliegenden Erfindung werden anhand der folgenden Beschreibung einer Ausführungsform der dazugehörigen Figur deutlich.

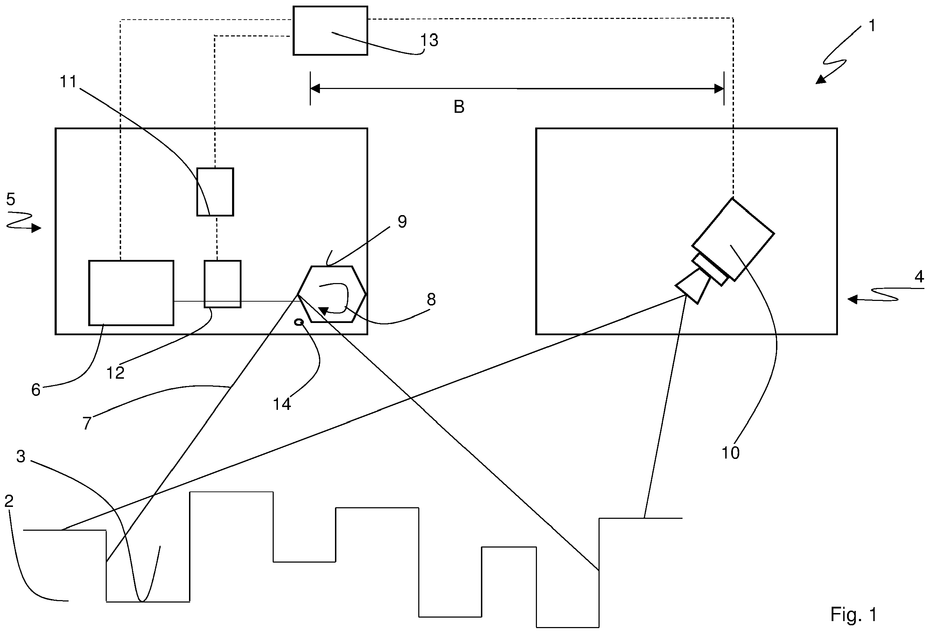

- Figur 1: ist eine schematische Darstellung eines erfindungsgemäßen Systems zur Inspektion zumindest einer Geometrie oder einer Oberfläche eines Objekts.

Aufgabe des Systems und des Verfahrens, so wie sie nachfolgend beschrieben werden, ist es, eine makroskopische Geometrie eines Objekts 2 sowie eine Struktur einer Oberfläche 3 des Objekts 2 auf einer kleineren Skala als der der makroskopischen Geometrie zu erfassen und so das Objekt zu inspizieren. In dem beschriebenen Beispiel dient diese Inspektion dazu, Risse in einem Abschnitt eines Brückenpfeilers 2 unter Wasser zu identifizieren. Der Brückenpfeiler bildet das zu inspizierende Objekt im Sinne der vorliegenden Anmeldung. Zu diesem Zweck ist das beschriebene System 1 auf einem ferngesteuerten Unterseeboot montiert.

Dabei erfasst das System 1 die Teile des Brückenpfeilers 2, welche unter Wasser liegen. Dazu weist das System 1 eine Triangulationseinrichtung 4 auf Basis eines Lichtschnittverfahrens und eine Laufzeitmesseinrichtung 5 auf. Die Triangulationseinrichtung 4 und die Laufzeitmesseinrichtung 5 können gleichzeitig arbeiten und jeweils ein Messergebnis als erstes bzw. zweites Maß für zumindest die Geometrie oder die Oberfläche des Brückenpfeilers 2 berechnen und ausgeben.

Alternativ wird in dem beschriebenen Beispiel eine Entscheidung getroffen, welches der Teilsysteme 4, 5 unter den gegebenen Sichtbedingungen unter Wasser das qualitativ bessere Maß für zumindest die Geometrie oder die Oberfläche des Brückenpfeilers 2 erzeugt. Dabei nutzen beide Teilsysteme 4, 5 Elemente oder Komponenten gemeinsam.

Das System 1 verfügt über genau eine Strahlungsquelle 6 in Form eines Lasers, welcher elektromagnetische Strahlung 7 mit einer Wellenlänge von 532 nm erzeugt und abstrahlt. Die Strahlungsquelle 6 bzw. die von ihr erzeugte elektromagnetische Strahlung 7 wird sowohl für das Triangulationsverfahren als auch für das Laufzeitmessverfahren verwendet.

Das System 1 verfügt zudem über eine Ablenkeinheit 8. Die Ablenkeinheit 8 ist von einem sechseckigen Körper mit verspiegelten Außenflächen 9 gebildet. Der Körper rotiert um eine Achse, so dass die Strahlung 7 wiederholt eine Linie auf den Brückenpfeiler 2 überstreicht. Die Ablenkeinrichtung 8 dient der Triangulationseinrichtung 4 als Teil einer Zeilenoptik, da sie die punktförmig von dem Laser 6 abgestrahlte elektromagnetische Strahlung 7 linien- oder zeilenförmig über die Oberfläche 3 des Brückenpfeilers 2 ablenkt, sodass bei einer hinreichend langen Beobachtungs- bzw. Integrationszeit eine Linie auf der Oberfläche 3 des Objekts 2 beleuchtet wird. Die Triangulationseinrichtung 4 weist zudem einen Triangulationsdetektor 10 in Form einer Kamera auf. Dieser Triangulationsdetektor ist in der dargestellten Ausführungsform in einem festen Basisabstand B von der Ablenkeinheit 8 angeordnet und beobachtet die Linie auf dem Brückenpfeiler unter einem von dem Einfallswinkel der Strahlung 7 auf die Oberfläche 3 verschiedenen Winkel.

Für die Laufzeitmesseinrichtung 5 hingegen dient die Ablenkeinheit 8 zudem dem Abtasten der Oberfläche 3 des Objekts 2 mit der elektromagnetischen Strahlung 7 mit einer Mehrzahl von Messpunkten, die entlang der Linie angeordnet sind. Von dieser Mehrzahl von Punkten auf der Oberfläche 3 wird die Laufzeit der elektromagnetischen Strahlung zwischen dem System 1 und der Oberfläche 3 gemessen. Die Laufzeitmesseinrichtung 5 weist einen punktförmigen Laufzeitdetektor 11 in Form einer Fotodiode auf, welcher dazu dient, die von der Oberfläche 3 zurückreflektierte elektromagnetische Strahlung 7 zu erfassen. Zu diesem Zweck sitzt der Laufzeitdetektor 11 im gleichen Strahlengang wie der Laser 6, wobei ein teilreflektierender Spiegel 12 die von der Oberfläche 3 zurückreflektierte Strahlung vor dem Laser 6 auf den Detektor 11 leitet.

Ein Rechner als Steuer- und Auswerteeinrichtung 13 dient in dem Betrieb des Systems 1 der Steuerung der einzelnen Elemente und der Signalauswertung der von dem Triangulationssensor 10 und dem Laufzeitdetektor 11 erfassten Signale. Dazu ist die Auswerte- und Steuereinrichtung mit dem Laser 6 verbunden sowie mit dem Laufzeitdetektor 11 und dem Triangulationsdetektor 10. Die Steuer- und Auswerteeinrichtung prägt dem Laser 6 eine Intensitätsmodulation auf, wobei die Modulationsfrequenz als Referenzsignal für die Laufzeitmessung dient.

Die Auswerteeinrichtung 13 errechnet für jeden Punkt der von der elektromagnetischen Strahlung 7 abgetasteten Linie auf der Oberfläche 3 des Objekts 2 eine Laufzeit der elektromagnetischen Strahlung zwischen einem Referenzpunkt 14 des Systems 1 und der Oberfläche 3. Aus der Laufzeit lässt sich unter der Voraussetzung, dass die relative Position des Systems 1 zu dem Objekt 2 zumindest während der Messung entlang einer Linie konstant bleibt, ein zweites Maß für die Geometrie des Brückenpfeilers und für die Oberfläche 3 des Objekts 2 rekonstruieren.

Die Kamera 10 generiert zudem ein Bild der von der elektromagnetischen Strahlung 7 auf die Oberfläche 3 des Objekts 2 projizierten Linie, wobei die Auswerteeinrichtung 13 die Verschiebung der Linie im Kamerabild mit Methoden der Fotogrammmetrie in 3D-Koordinaten umrechnet, sodass auch aus dem Signal der Kamera 10 ein erstes Maß für die Oberfläche 3 rekonstruiert werden kann.

Um jeweils ein vollständiges dreidimensionales Bild der Oberfläche 3 des Brückenpfeilers 2 erfassen zu können, wird die auf der Oberfläche 3 ausgebildete Linie über die Oberfläche 3 bewegt. Dazu ist in der beschriebenen Ausführungsform das System 1 auf einem ferngesteuerten U-Boot montiert, welches seine Position gegenüber der Oberfläche 3 des Objekts 2 während der Inspektion ändert.

Die Laufzeitmesseinrichtung 5 dient auch dazu, den Arbeitsabstand, d.h. den Abstand zwischen dem Referenzpunkt 14 und dem Objekt 2, während der Messung zu bestimmen. Der ermittelte Arbeitsabstand dient dann als Entscheidungsgrundlage, ob das erste Maß oder das zweite Maß für die Oberfläche 3 des Brückenpfeilers 2 der in dem System 1 implementierten Messverfahren ausgegeben wird. Ist der Arbeitsabstand größer ist als ein vorgegebener Abstandsschwellenwert von 10 m so wird nur das zweite, mit der Laufzeitmesseinrichtung 5 bestimmte Maß für die Oberfläche 3 des Brückenpfeilers 2 ausgegeben. Ist hingegen der Arbeitsabstand kleiner oder gleich dem Abstandsschwellenwert von 10 m, so wird nur das erste Maß für die Oberfläche 3 des Brückenpfeilers 2 ausgegeben.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmalen oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt. Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: System
- 2: Brückenpfeiler
- 3: Oberfläche
- 4: Triangulationseinrichtung
- 5: Laufzeitmesseinrichtung
- 6: Strahlungsquelle
- 7: elektromagnetische Strahlung
- 8: Ablenkeinheit
- 9: Spiegelflächen
- 10: Triangulationsdetektor
- 11: Laufzeitdetektor
- 12: teildurchlässiger Spiegel
- 13: Steuer- und Auswerteeinrichtung
- 14: Referenzpunkt

- B: Basisabstand

## Patentansprüche

1. System (1) zur Inspektion zumindest einer Geometrie oder einer Oberfläche (3) eines Objekts (2) mit einer Triangulationseinrichtung (4),
wobei die Triangulationseinrichtung (4)
eine Strahlungsquelle (6),
eine Zeilenoptik (8),
einen Triangulationsdetektor (10) und
eine Auswerteeinrichtung (13) aufweist,
wobei die Strahlungsquelle (6) derart eingerichtet ist, dass sie in einem Betrieb des Systems (1) elektromagnetische Strahlung (7) erzeugt und abstrahlt,
wobei die Zeilenoptik (8) derart eingerichtet und angeordnet ist, dass sie in dem Betrieb des Systems (1) die von der Strahlungsquelle (6) abgestrahlte elektromagnetische Strahlung (7) zumindest derart formt oder ablenkt, dass die elektromagnetische Strahlung (7) das Objekt (2) beleuchtet und auf dem Objekt (2) eine Linie ausbildet,
wobei die Zeilenoptik (8) und der Triangulationsdetektor (10) derart angeordnet und eingerichtet sind, dass sie einen Basisabstand (B) zueinander aufweisen und der Triangulationsdetektor (10) ein Bild der Linie auf dem Objekt (2) erfasst,
wobei die Auswerteeinrichtung (13) derart wirksam mit dem Triangulationssensor (10) verbunden ist, dass die Auswerteeinrichtung (13) in dem Betrieb des Systems (1) ein das Bild repräsentierendes Signal von dem Triangulationsdetektor (10) empfängt und
wobei die Auswerteeinrichtung (13) derart eingerichtet ist, dass sie in dem Betrieb des Systems (1) aus einer Verzerrung des Bildes und dem Basisabstand (B) ein erstes Maß zumindest für die Geometrie oder die Oberfläche (3) des Objekts (2) berechnet,
**dadurch gekennzeichnet, dass**
das System (1) eine Laufzeitmesseinrichtung (5) aufweist,
wobei die Laufzeitmesseinrichtung (5)
die Strahlungsquelle (6),
die Zeilenoptik (8),
die Auswerteeinrichtung (13),
einen Laufzeitdetektor (11) und
eine Modulationseinrichtung umfasst,
wobei die Zeilenoptik (8) und der Laufzeitdetektor (11) derart angeordnet und eingerichtet sind, dass in dem Betrieb des Systems (1) das Objekt (2) an einer Mehrzahl von Punkten auf der Linie nacheinander beleuchtet wird und die von dem Objekt (2) reflektierte elektromagnetische Strahlung (7) von dem Laufzeitdetektor (11) erfasst wird,
wobei die Modulationseinrichtung derart eingerichtet ist, dass in dem Betrieb des Systems eine Amplitude der elektromagnetischen Strahlung (7) moduliert ist,
wobei die Auswerteeinrichtung (13) derart wirksam mit dem Laufzeitdetektor (11) verbunden ist, dass die Auswerteeinrichtung (13) in dem Betrieb des Systems (1) ein Laufzeitsignal empfängt und
wobei die Auswerteeinrichtung (13) derart eingerichtet ist, dass sie in dem Betrieb des Systems (1) aus dem Laufzeitsignal jeweils eine Laufzeit der elektromagnetischen Strahlung (7) von einem Referenzpunkt (14) des Systems (1) zu dem Objekt (2) für eine Mehrzahl von Punkten (14) auf der Linie berechnet und aus den Laufzeiten für die Mehrzahl von Punkten (14) ein zweites Maß zumindest für die Geometrie oder die Oberfläche (3) des Objekts (2) berechnet und zumindest das erste oder das zweite Maß ausgibt.

2. System (1) nach dem vorhergehenden Anspruch, wobei der Basisabstand (B) einstellbar veränderbar ist.

3. Fortbewegungsmittel, insbesondere Unterseeboot, mit einem System (1) nach einem der vorhergehenden Ansprüche.

4. Verfahren zur Inspektion zumindest einer Geometrie oder einer Oberfläche (3) eines Objekts (2) mit den Schritten
Erzeugen elektromagnetischer Strahlung (7) mit einer Strahlungsquelle (6), Abstrahlen der elektromagnetischen Strahlung (7),
zumindest Formen oder Ablenken der abgestrahlten elektromagnetischen Strahlung (7) mit einer Zeilenoptik (8), so dass die elektromagnetische Strahlung (7) das Objekt (2) entlang einer Linie beleuchtet,
Erfassen eines Bildes der Linie auf dem Objekt (2) mit einem von der Zeilenoptik (8) in einem Basisabstand (B) angeordneten Triangulationsdetektor (10) und Berechnen eines ersten Maßes zumindest für die Geometrie oder die Oberfläche (3) des Objekts (2) aus einer Verzerrung des Bildes und dem Basisabstand (B),
**dadurch gekennzeichnet, dass** das Verfahren weiterhin die Schritte aufweist
Modulieren einer Amplitude der elektromagnetischen Strahlung (7), Beleuchten des Objekts (2) an einer Mehrzahl von Punkten (14) auf der Linie nacheinander mit der modulierten elektromagnetischen Strahlung (7), Erfassen der von dem Objekt (2) reflektierten elektromagnetischen Strahlung (7),
Bestimmen jeweils einer Laufzeit der elektromagnetischen Strahlung (7) von einem Referenzpunkt (14) in einem Strahlengang der elektromagnetischen Strahlung (7) zu dem Objekt (2) für eine Mehrzahl von Punkten auf der Linie, Berechnen eines zweiten Maßes zumindest für die Geometrie oder die Oberfläche (3) des Objekts (2) entlang der Linie aus den Laufzeiten für die Mehrzahl von Punkten (14) auf der Linie und
Ausgeben zumindest des ersten oder des zweiten Maßes.

5. Verfahren nach dem vorhergehenden Anspruch, wobei das Verfahren den Schritt aufweist
Bestimmen eines Arbeitsabstands der Oberfläche (3) des Objekts (2) von dem Referenzpunkt (14).

6. Verfahren nach dem vorhergehenden Anspruch, wobei das Verfahren die Schritte aufweist
wenn der Arbeitsabstand größer ist als ein vorgegebener Abstandsschwellenwert, Ausgeben nur des zweiten Maßes zumindest für die Geometrie oder die Oberfläche (3) des Objekts (2) und
wenn der Arbeitsabstand kleiner oder gleich dem Abstandsschwellenwert ist, Ausgeben nur des erste Maßes zumindest für die Geometrie oder die Oberfläche (3) des Objekts (2).

7. Verfahren nach Anspruch 5 oder 6, wobei der Arbeitsabstand aus der Laufzeit der elektromagnetischen Strahlung (7) für mindestens einen Punkt auf der Linie berechnet wird.

8. Verfahren nach einem der Ansprüche 4 bis 7, wobei das Verfahren den Schritt aufweist Bestimmen eines Qualitätsmaßes für das zweite Maß zumindest für die Geometrie oder die Oberfläche (3) des Objekts (2).

9. Verfahren nach dem vorhergehenden Anspruch, wobei das Verfahren die Schritte ausweist
wenn das Qualitätsmaß größer ist als ein vorgegebener Qualitätsschwellenwert, Ausgeben nur des ersten Maßes zumindest für die Geometrie oder die Oberfläche (3) des Objekts (2) und
wenn das Qualitätsmaß kleiner oder gleich dem Qualitätsschwellenwert ist, Ausgeben nur des zweiten Maßes zumindest für die Geometrie oder die Oberfläche (3) des Objekts (2).

10. Verfahren nach dem vorhergehenden Anspruch, wobei die Oberfläche (3) des Objekts (2) unter Wasser angeordnet ist und wobei das Qualitätsmaß ein Trübungsgrad des Wassers oder eine Sichtweite unter Wasser ist.

11. Verfahren nach Anspruch 9 oder 10, wobei das Qualitätsmaß aus der Laufzeit mindestens eines Punktes (14) auf der Linie berechnet wird.

12. Verfahren nach einem der Ansprüche 4 bis 11 soweit von Ansprüchen 5 und 8 abhängig, wobei das Verfahren die Schritte aufweist
Berechnen eines Ausgabemaßes aus dem Arbeitsabstand und dem Qualitätsmaß,
wenn das Ausgabemaß größer ist als ein vorgegebener Ausgabeschwellenwert, Ausgeben nur des zweiten Maßes zumindest für die Geometrie oder die Oberfläche (3) des Objekts (2) und
wenn das Ausgabemaß kleiner oder gleich dem Ausgabeschwellenwert ist, Ausgeben nur des ersten Maßes zumindest für die Geometrie oder die Oberfläche (3) des Objekts (2).

13. Verfahren nach einem der Ansprüche 4 bis 12, wobei die Linie gegenüber dem Objekt (2) bewegt wird.

14. Verfahren nach einem der Ansprüche 4 bis 13, wobei die der Referenzpunkt (14) gegenüber dem Objekt (2) bewegt wird.

15. Verfahren nach einem der Ansprüche 4 bis 14, wobei eine Position des Referenzpunkts (14) relativ zu einem Punkt auf der Oberfläche (3) des Objekts (2) mittels einer Positionsstabilisierung konstant gehalten wird.

## Claims

1. A system (1) for inspecting at least a geometry or a surface (3) of an object (2) using a triangulation means (4),
wherein the triangulation means (4) comprises
a radiation source (6),
a line optics (8),
a triangulation detector (10) and
an evaluation means (13),
wherein the radiation source (6) is configured such that it generates and emits electromagnetic radiation (7) during operation of the system (1), wherein the line optics (8) is arranged and located such that during operation of the system (1) it shapes or deflects the electromagnetic radiation (7) emitted by the radiation source (6) at least in such a way that the electromagnetic radiation (7) illuminates the object (2) and forms a line on the object (2),
wherein the line optics (8) and the triangulation detector (10) are arranged and located in such a way that they comprise a base distance (B) from one another and the triangulation detector (10) captures an image of the line on the object (2),
wherein the evaluation means (13) is operatively connected to the triangulation sensor (10) such that the evaluation means (13) receives a signal representing the image from the triangulation detector (10) during operation of the system (1), and
wherein the evaluation means (13) is set up such that during operation of the system (1) it calculates a first measure at least for the geometry or the surface (3) of the object (2) from a distortion of the image and the base distance (B),
**characterised in that**
the system (1) comprises a time-of-flight measuring means (5),
wherein the time-of-flight measuring means (5) comprises
the radiation source (6),
the line optics (8),
the evaluation means (13),
a time-of-flight detector (11) and
a modulation means,
wherein the line optics (8) and the time-of-flight detector (11) are arranged and located such that, during operation of the system (1), the object (2) is illuminated successively at a plurality of points on the line and the electromagnetic radiation (7) reflected by the object (2) is detected by the time-of-flight detector (11),
wherein the modulation means is arranged such that during operation of the system an amplitude of the electromagnetic radiation (7) is modulated,
wherein the evaluation means (13) is effectively connected to the time-of-flight detector (11) in such a way that the evaluation means (13) receives a time-of-flight signal during operation of the system (1), and wherein the evaluation means (13) is set up in such a way that, during operation of the system (1), it calculates from the time-of-flight signal a time-of-flight of the electromagnetic radiation (7) from a reference point (14) of the system (1) to the object (2) for each of a plurality of points (14) on the line and calculates from the times-of-flight for the plurality of points (14) a second measure at least for the geometry or the surface (3) of the object (2) and outputs at least the first or the second measure.

2. The system (1) according to the previous claim, wherein the base distance (B) is adjustably variable.

3. A transport means, in particular a submarine, comprising a system (1) according to any one of the previous claims.

4. A method for inspecting at least a geometry or a surface (3) of an object (2), comprising the steps of
generating electromagnetic radiation (7) with a radiation source (6),
radiating the electromagnetic radiation (7),
at least shaping or deflecting the emitted electromagnetic radiation (7) with a line optic (8), so that the electromagnetic radiation (7) illuminates the object (2) along a line,
capturing an image of the line on the object (2) with a triangulation detector (10) located at a base distance (B) from the line optics (8) and calculating a first measure of at least the geometry or the surface (3) of the object (2) from a distortion of the image and the base distance (B),
**characterised in that** the method further comprises the steps of
modulating an amplitude of the electromagnetic radiation (7),
illuminating the object (2) at a plurality of points (14) on the line successively with the modulated electromagnetic radiation (7),
detecting the electromagnetic radiation (7) reflected by the object (2), determining a time of flight of the electromagnetic radiation (7) from a reference point (14) in a beam path of the electromagnetic radiation (7) to the object (2) for each of a plurality of points on the line,
calculating a second measure of at least the geometry or the surface (3) of the object (2) along the line from the time of flights for the plurality of points (14) on the line, and
outputting at least the first or the second measure.

5. The method according to the previous claim, wherein the method comprises the step of
determining a working distance of the surface (3) of the object (2) from the reference point (14).

6. The method according to the previous claim, wherein the method comprises the steps of
if the working distance is larger than a predetermined distance threshold, outputting only the second measure at least for the geometry or the surface (3) of the object (2), and
if the working distance is less than or equal to the distance threshold value, outputting only the first measure at least for the geometry or the surface (3) of the object (2).

7. The method according to any one of claims 5 or 6, wherein the working distance is calculated from the propagation time of the electromagnetic radiation (7) for at least one point on the line.

8. The method according to any one of claims 4 to 7, wherein the method comprises the step of
determining a quality measure for the second measure at least for the geometry or the surface (3) of the object (2).

9. The method according to any one of the previous claims, wherein the method comprises the step of
if the quality measure is larger than a predetermined quality threshold, outputting only the first measure at least for the geometry or the surface (3) of the object (2), and
if the quality measure is less than or equal to the quality threshold value, outputting only the second measure at least for the geometry or the surface (3) of the object (2).

10. The method according to the previous claim, wherein the surface (3) of the object (2) is located under water and wherein the quality measure is a turbidity level of the water or a visibility under water.

11. The method according to claim 9 or 10, wherein the quality measure is calculated from the time of flight of at least one point (14) on the line.

12. The method according to any one of claims 4 to 11 as far as dependent on claims 5 and 8, wherein the method comprises the steps of
calculating an output measure from the working distance and the quality measure,
if the output measure is larger than a predetermined output threshold value, outputting only the second measure at least for the geometry or the surface (3) of the object (2), and
if the output measure is less than or equal to the output threshold value, outputting only the first measure at least for the geometry or the surface (3) of the object (2).

13. The method according to any one of claims 4 to 12, wherein the line is moved with respect to the object (2).

14. The method according to any one of claims 4 to 13, wherein the reference point (14) is moved relative to the object (2).

15. The method according to any one of claims 4 to 14, wherein a position of the reference point (14) relative to a point on the surface (3) of the object (2) is kept constant by means of a position stabilisation.

## Revendications

1. Système (1) permettant d'inspecter au moins une géométrie ou une surface (3) d'un objet (2) au moyen d'un dispositif de triangulation (4),
dans lequel le dispositif de triangulation (4) présente
une source de rayonnement (6),
une optique de balayage (8),
un détecteur de triangulation (10) et
un dispositif d'évaluation (13),
où la source de rayonnement (6) est configurée de manière à générer et émettre un rayonnement électromagnétique (7) lors du fonctionnement du système (1),
où l'optique de balayage (8) est configurée et agencée de manière à former ou dévier le rayonnement électromagnétique (7) émis par la source de rayonnement (6) pendant le fonctionnement du système (1) au moins de façon telle que le rayonnement électromagnétique (7) éclaire l'objet (2) et génère une ligne sur l'objet (2),
où l'optique de balayage (8) et le détecteur de triangulation (10) sont agencés et configurés de manière à présenter une distance de base (B) l'un par rapport à l'autre et à ce que le détecteur de triangulation (10) détecte une image de la ligne sur l'objet (2),
où le dispositif d'évaluation (13) est relié de manière active au capteur de triangulation (10) de façon telle que, pendant le fonctionnement du système (1), le dispositif d'évaluation (13) reçoit du détecteur de triangulation (10) un signal représentant l'image et où le dispositif d'évaluation (13) est configuré de manière à calculer une première mesure au moins pour la géométrie ou la surface (3) de l'objet (2) à partir d'une distorsion de l'image et à partir de la distance de base (B) pendant le fonctionnement du système (1),
**caractérisé en ce que**
le système (1) présente un dispositif de mesure du temps de vol (5), où le dispositif de mesure du temps de vol (5) comprend
la source de rayonnement (6),
l'optique de balayage (8),
le dispositif d'évaluation (13),
un détecteur de temps de vol (11) et
un dispositif de modulation,
où l'optique de balayage (8) et le détecteur de temps de vol (11) sont agencés et configurés de façon telle que l'objet (2) est éclairé de manière successive au niveau d'une pluralité de points situés sur la ligne, et le rayonnement électromagnétique (7) réfléchi par l'objet (2) est détecté par le détecteur de temps de vol (11), où le dispositif de modulation est configuré de façon telle qu'une amplitude du rayonnement électromagnétique (7) est modulée pendant le fonctionnement du système,
où le dispositif d'évaluation (13) est relié de manière active au détecteur de temps de vol (11) de façon telle que le dispositif d'évaluation (13) reçoit un signal de temps de vol pendant le fonctionnement du système (1) et
où le dispositif d'évaluation (13) est configuré de manière à calculer, à partir du signal de temps de vol et pendant le fonctionnement du système (1), respectivement un temps de vol du rayonnement électromagnétique (7) depuis un point de référence (14) du système (1) jusqu'à l'objet (2) pour une pluralité de points (14) situés sur la ligne, et de manière à calculer une seconde mesure au moins pour la géométrie ou la surface (3) de l'objet (2) à partir des temps de vol pour la pluralité de points (14), et à fournir au moins la première ou la seconde mesure.

2. Système (1) selon la revendication précédente, dans lequel la distance de base (B) peut être modifiée par ajustement.

3. Moyen de transport, en particulier sous-marin, équipé d'un système (1) selon l'une des revendications précédentes.

4. Procédé permettant d'inspecter au moins une géométrie ou une surface (3) d'un objet (2), comprenant les étapes consistant à
générer un rayonnement électromagnétique (7) à l'aide d'une source de rayonnement (6),
émettre le rayonnement électromagnétique (7),
au moins former ou dévier le rayonnement électromagnétique (7) émis, au moyen d'une optique de balayage (8), de sorte que le rayonnement électromagnétique (7) éclaire l'objet (2) le long d'une ligne,
détecter une image de la ligne sur l'objet (2) au moyen d'un détecteur de triangulation (10) agencé à une distance de base (B) de l'optique de balayage (8) et
calculer une première mesure au moins pour la géométrie ou la surface (3) de l'objet (2) à partir d'une distorsion de l'image et à partir de la distance de base (B),
**caractérisé en ce que** le procédé comprend en outre les étapes consistant à
moduler une amplitude du rayonnement électromagnétique (7), éclairer l'objet (2) avec le rayonnement électromagnétique (7) modulé de manière successive au niveau d'une pluralité de points (14) situés sur la ligne,
détecter le rayonnement électromagnétique (7) réfléchi par l'objet (2), déterminer respectivement un temps de vol du rayonnement électromagnétique (7) depuis un point de référence (14) sur un trajet optique du rayonnement électromagnétique (7) jusqu'à l'objet (2) pour une pluralité de points situés sur la ligne,
calculer une seconde mesure au moins pour la géométrie ou la surface (3) de l'objet (2) le long de la ligne à partir des temps de vol pour la pluralité de points (14) situés sur la ligne, et
fournir au moins la première ou la seconde mesure.

5. Procédé selon la revendication précédente, dans lequel le procédé comprend l'étape consistant à
déterminer une distance de travail entre la surface (3) de l'objet (2) et le point de référence (14).

6. Procédé selon la revendication précédente, dans lequel le procédé comprend les étapes consistant à,
si la distance de travail est supérieure à une valeur de seuil de distance prédéfinie, ne fournir que la seconde mesure au moins pour la géométrie ou la surface (3) de l'objet (2) et
si la distance de travail est inférieure ou égale à la valeur de seuil de distance, ne fournir que la première mesure au moins pour la géométrie ou la surface (3) de l'objet (2).

7. Procédé selon la revendication 5 ou 6, dans lequel la distance de travail est calculée à partir du temps de vol du rayonnement électromagnétique (7) pour au moins un point situé sur la ligne.

8. Procédé selon l'une des revendications 4 à 7, dans lequel le procédé comprend l'étape consistant à
déterminer une mesure de qualité pour la seconde mesure au moins pour la géométrie ou la surface (3) de l'objet (2).

9. Procédé selon la revendication précédente, dans lequel le procédé comprend les étapes consistant à
si la mesure de qualité est supérieure à une valeur de seuil de qualité prédéfinie, ne fournir que la première mesure au moins pour la géométrie ou la surface (3) de l'objet (2) et
si la mesure de qualité est inférieure ou égale à la valeur de seuil de qualité, ne fournir que la seconde mesure au moins pour la géométrie ou la surface (3) de l'objet (2).

10. Procédé selon la revendication précédente, dans lequel la surface (3) de l'objet (2) est située sous l'eau et dans lequel la mesure de qualité est un degré de turbidité de l'eau ou une distance de visibilité sous l'eau.

11. Procédé selon la revendication 9 ou 10, dans lequel la mesure de qualité est calculée à partir du temps de vol d'au moins un point (14) situé sur la ligne.

12. Procédé selon l'une quelconque des revendications 4 à 11 dans la mesure où elles dépendent des revendications 5 et 8, dans lequel le procédé comprend les étapes consistant à
calculer une mesure de sortie à partir de la distance de travail et de la mesure de qualité,
si la mesure de sortie est supérieure à une valeur de seuil de fourniture prédéfinie, ne fournir que la seconde mesure au moins pour la géométrie ou la surface (3) de l'objet (2), et
si la mesure de sortie est inférieure ou égale à la valeur de seuil de fourniture, ne fournir que la première mesure au moins pour la géométrie ou la surface (3) de l'objet (2).

13. Procédé selon l'une des revendications 4 à 12, dans lequel la ligne est déplacée par rapport à l'objet (2).

14. Procédé selon l'une des revendications 4 à 13, dans lequel le point de référence (14) est déplacé par rapport à l'objet (2).

15. Procédé selon l'une des revendications 4 à 14, dans lequel une position du point de référence (14) par rapport à un point situé sur la surface (3) de l'objet (2) est maintenue constante au moyen d'une stabilisation de position.
